# EUROPÄISCHE PATENTSCHRIFT

(11) **EP 1 746 861 B1**
(45) Veröffentlichungstag und Bekanntmachung des Hinweises auf die Patenterteilung: **08.04.2009**
(21) Anmeldenummer: 06116877.9
(22) Anmeldetag: 10.07.2006
(51) Int. Cl.: H04R 25/00

(54) **Hörvorrichtung ohne Referenztakt-Bauteil**
Hearing device without reference-clock
Appareil auditif sans horloge de référence

(30) Priorität: 22.07.2005 DE 102005034369
(43) Veröffentlichungstag der Anmeldung: 24.01.2007
(73) Patentinhaber: Siemens Audiologische Technik GmbH, 91058 Erlangen (DE)
(72) Erfinder: Schätzle, Ulrich, 91301 Forchheim (DE); Nikles, Peter, 91054 Erlangen (DE); Rückerl, Gottfried, 90461 Nürnberg (DE)
(74) Vertreter: Maier, Daniel Oliver

(56) Entgegenhaltungen:
- US-A- 5 276 706
- US-A1- 2004 037 442
- US-B1- 6 188 290

## Beschreibung

Die vorliegende Erfindung betrifft ein Hörgerät mit einer Datenübertragungseinrichtung zum Empfangen eines Synchronisationssignals und einer Oszillatoreinrichtung zum Takten der Datenübertragungseinrichtung.

Generell besteht der Bedarf, schnelle und drahtlose Datenübertragungen von und zu Hörgeräten zu realisieren. Dabei sollen alle Hörgerätetypen von großen HdO-Hörgeräten (Hinterdem-Ohr) über IdO-Hörgeräte (In-dem-Ohr) bis zu den kleinsten CIC-Hörgeräten (Completely in the Channel) mit schnellen Datenübertragungen versehen werden können. Die dafür notwendigen, mehrwertigen Modulationstechniken (QAM, QPSK) setzen jedoch voraus, dass die Oszillatorfrequenzen von Sender und Empfänger mit einer Genauigkeit <+/-0,1% übereinstimmen.

Bisher erreichbare Datenraten ohne frequenzstabile Bauteile liegen bei ca. 100bit/s für sogenannte Ear-to-Ear-Verbindungen. Für höhere Datenraten sind frequenzstabile Bauteile wie Quarze, SAW-Bauteile (Surface Acoustic Wave), Keramikresonatoren oder Micro-Electromechanic-Structurs (MEMS) notwendig. Die Audio-Datenübertragung erfolgt dann meist zu Hörgeräte-Zusatzadaptern. Für IdO- oder CIC-Hörgeräte stehen keine Lösungen mit hoher Datenrate (>40kbit/s) zur Verfügung.

Die Patentschrift US 6 800 39 447 B2 beschreibt Funkübertragungstechniken (DSSS, FHSS), die in den kommerziellen Funk= netzen (GSM, DECT, WLAN, Bluetooth) verwendet werden und zeigt entsprechende Hörgeräteanwendungen. Speziell wird dort das sogenannte "Clock-Retrieving" geschildert, wonach der Symbol-Clock zur synchronen Übergabe der demodulierten Daten wiederhergestellt wird. Außerdem wird ein sogenanntes "RF-Carrier-Recovery"-Verfahren vorgestellt, gemäß dem eine Trägerfrequenz z. B. zur kohärenten Demodulation wiederhergestellt wird. Diese Verfahren funktionieren jedoch nur dann zuverlässig, wenn im Hörgerät bereits ein stabiler Grundtakt verfügbar ist. Ansonsten wäre ein Einsynchronisieren zweier unabhängiger Hörgeräte extrem unsicher und störanfällig.

Üblicherweise verwendet man daher die oben geschilderten frequenzstabilen Bauteile wie Quarze. Dies gilt umso mehr für Frequenzbänder im Bereich von mehr als 200 MHz. Die zu verwendenden frequenzstabilen Bauteile haben jedoch den Nachteil eines hohen Stromverbrauchs und großen Platzbedarfs, was insbesondere für IdO-Hörgeräte inakzeptabel ist.

Aus der Druckschrift US 5,276,706 A ist ein Verfahren zum Minimieren des Frequenzoffsets zwischen digitalen Kommunikationsstationen bekannt. Empfängerseitig wird ein abstimmbarer Kristalloszillator eingesetzt. Mithilfe eines Korrelators wird die Frequenz des Oszillators mit der eines Senders abgestimmt.

Darüber hinaus beschreibt die Druckschrift US 6,118,290 B1 ein Verfahren zur Initialisierung eines Oszillatorschaltkreises. Eine Programmierschaltung dient zum Anpassen der Kristalloszillatorfrequenz.

Ferner offenbart die Druckschrift US 2004/0037442 A1 ein synchronisiertes binaurales Hörsystem. Ein erster Taktgenerator arbeitet als Master-Takt-Schaltung in einem Hörgerät des binauralen Systems. Ein Taktgenerator in dem anderen Hörgerät des binauralen Systems wird entsprechend synchronisiert. Dazu werden die Phasen so aneinander angepasst, dass die Signalkorrelation maximal ist.

Die Aufgabe der vorliegenden Erfindung besteht somit darin, den Stromverbrauch und Platzbedarf für Bauteile, die für eine schnelle, drahtlose Datenübertragung notwendig sind, zu reduzieren, so dass insbesondere auch für IdO- und CIC-Hörgeräte eine derartige Datenübertragung realisierbar ist.

Erfindungsgemäß wird diese Aufgabe gelöst durch ein Hörgerät mit einer Datenübertragungseinrichtung zum Empfangen eines Synchronisationssignals und einer Oszillatoreinrichtung zum Takten der Datenübertragungseinrichtung, wobei die Oszillatoreinrichtung einen freilaufenden Oszillator ohne frequenzstabiles Bauteil umfasst und eine Korrelationseinrichtung an die Datenübertragungseinrichtung angeschlossen ist, so dass mit der Korrelationseinrichtung ein vorgebbares Referenzsignal mit dem Synchronisationssignal korrelierbar und anhand des Korrelationsergebnisses der freilaufende Oszillator hinsichtlich seiner Frequenz nachstimmbar ist.

In vorteilhafter Weise kann durch den nachstimmbaren, freilaufenden Oszillator auf ein frequenzstabiles Bauteil verzichtet werden, wodurch nicht nur der Platzbedarf, sondern auch der Stromverbrauch für die Datenübertragung deutlich reduziert werden kann.

Vorzugsweise können an den freilaufenden Oszillator schaltbare Kapazitäten zum Nachstimmen des Oszillators angeschlossen werden. Dadurch lässt sich auf einfache Weise ein automatisches Nachstimmen realisieren. Alternativ kann das Nachstimmen auch durch den verwendeten Ladestrom für die Kapazität umgesetzt werden.

Wenn die Hörvorrichtung digital ausgestaltet ist, kann das Synchronisationssignal aus einem zyklisch wiederkehrenden Burst bestehen. Ein derartiger Burst, der aus einer langen Signalfolge, deren Autokorrelationsfunktion extrem pulskomprimiert ist, besteht, lässt sich mit hoher Sicherheit am Empfänger detektierten.

Bei einer speziellen Ausführungsform kann der freilaufende Oszillator mit jedem Burst nachgestimmt werden. Dies ist insbesondere dann notwendig, wenn verhältnismäßig starke Schwankungen des freilaufenden Oszillators zu erwarten sind.

Ist die Hörvorrichtung analog ausgestaltet, so kann das Synchronisationssignal aus einem zyklisch wiederkehrenden Chirp bestehen. Auch derartige Chirps eignen sich besonders gut zur Wiedererkennung.

Bei einer weiteren bevorzugten Ausführungsform weist die Oszillatoreinrichtung eine Zähleinheit zum Erzeugen eines Zählsignals zwischen zwei Synchronisationssignalen und eine Speichereinheit zum Speichern einer Frequenzcharakteristik auf, so dass aus dem Zählsignal eine direkte oder indirekte Frequenz bestimmbar ist, in die der freilaufende Oszillator zu stimmen ist. Durch diese Zählmethode lässt sich das Nachstimmen des Oszillators sehr genau realisieren. Günstig hierbei ist, wenn in der Speichereinheit eine Look-up-Tabelle gespeichert ist, aus der über das Zählsignal ein Zu- und Wegschalten von Kapazitäten als indirektes Frequenzmaß bestimmbar ist. Aus dem Zählsignal lässt sich damit sehr rasch bestimmen, wie der Oszillator mit den Kapazitäten nachgestimmt werden muss, so dass sich die entsprechende Frequenz einstellt.

Die vorliegende Erfindung wird nun anhand der beigefügten Zeichnungen näher erläutert, in denen zeigen:
- FIG 1: ein Prinzipschaltbild eines Datenübertragungsteils einer erfindungsgemäßen Hörvorrichtung;
- FIG 2: ein Synchronisationssignal und
- FIG 3: ein autokorreliertes Ausgangssignal des Korrelators zur Synchronisation eines freilaufenden Oszillators.

Das nachfolgend näher geschilderte Ausführungsbeispiel stellt eine bevorzugte Ausführungsform der vorliegenden Erfindung dar.

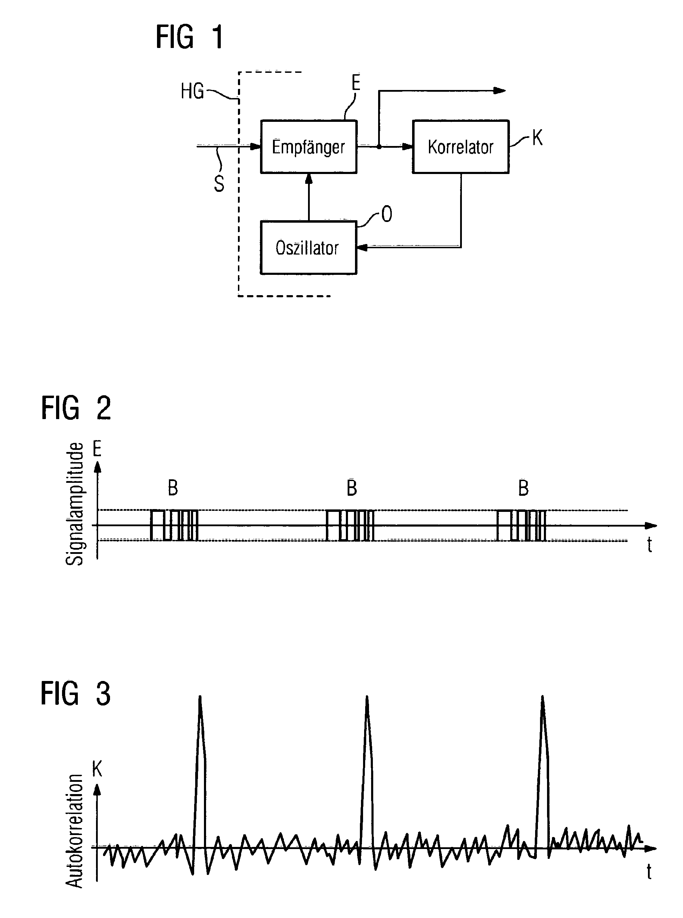

Gemäß FIG 1 besitzt ein Hörgerät HG einen freilaufenden Oszillator O, der über den Versorgungsstrom oder schaltbare Kapazitäten nachstimmbar ist. Bei digitalen Hörgeräten liefert dieser Oszillator O den Grundtakt für die Signalverarbeitung.

Zum Nachstimmen des Oszillators schickt ein externer Sender zyklisch kurze Burst-Signale, die einfach moduliert sind (z. B. FM, OOK, ASK, FSK) und auch bei schlechter Übereinstimmung von Sender-Oszillator mit dem Empfänger-Oszillator im Hörgerät noch eindeutig moduliert werden können. Jeder Burst besteht aus einer langen Signalfolge, deren Autokorrelationsfunktion - wie bereits erwähnt - extrem pulskomprimiert ist.

Würde das Hörgerät HG bzw. die Hörvorrichtung analog aufgebaut werden, so könnten für das Synchronisationssignal S sogenannte, aus der Radartechnik bekannte Chirps, die eine hohe Pulskompression erlauben, verwendet werden. Chirps sind Sinusbursts mit einem kontinuierlichen Sweep zwischen zwei Frequenzen. Die Pulskompression, bei der die Energie des Signals im Wesentlichen in Impulse komprimiert wird, geschieht im Empfänger durch ein dispersives Filter, in dem die tieffrequenten Signale stärker verzögert werden als die hochfrequenten Signale, d. h. die Signallaufzeit ist frequenzabhängig. Dadurch wird eine hohe Ortsauflösung der Signale erreicht.

Digitale Bitfolgen mit hoher Pulskompression sind beispielsweise bei der Funkübertragung nach IEE802.11x (WLAN) bekannt. Hier dienen sie zur Verschmierung der Sendeenergie über ein breites Frequenzband, damit schmalbandige Störer keinen Einfluss auf die Datensicherheit haben. Im Empfänger sorgt ein digitaler Korrelator für die Pulskompression.

Diese Techniken werden nun erfindungsgemäß im Hörgerät dazu genutzt, auf ein frequenzstabiles Bauteil, z. B. einen Quarz, verzichten zu können. Hierbei kommen die vom Sender zyklisch ans Hörgerät HG gesendeten Burst-Signale in einem zeitlichen Abstand, der direkt aus der Frequenz des Sender-Oszillators abgeleitet ist, an einem Empfänger E an. Beispielsweise schickt der Sender alle 10.000 Oszillatorperioden einen Burst. Durch die Burst-Kompression kann im Empfänger der Zeitpunkt des Eintreffens der periodisch gesendeten Bursts recht genau, z. B. +/-5 Perioden des Empfangsoszillators oder +/- 0,05% der Burstswiederholdauer bestimmt werden. Setzt man im einfachsten Fall die nominellen Oszillatorfrequenzen von Sender und Empfänger gleich, so würde ein vom Empfangsoszillator getakteter Zähler bei gut übereinstimmenden Frequenzen zwischen zwei Bursts eine Erhöhung des Zählerstands um 10.000 +/-5 anzeigen. Würde der Empfangsoszillator gegenüber dem Sendeoszillator um 1% voreilen, ergäbe die Erhöhung des Zählerstands einen Wert von 10.100 +/-5. Bei einem um 1% nacheilenden Empfangsoszillator ergäbe sich ein Wert von 9.900 +/-5.

Ist der Empfangsoszillator, wie eingangs erwähnt, nachstimmbar, kann mit Hilfe dieses Zählerergebnisses und einer im Hörgerät abgelegten Frequenzcharakteristik (Look-up-Tabelle) die Oszillatorfrequenz des Empfängers E an die des Senders angeglichen werden. In dem obigen Rechenbeispiel ist dies mit der Grundgenauigkeit von +/-0,05% möglich. Diese Korrektur wird mit jedem neuen Burst aktualisiert, so dass die beiden Frequenzen nicht wieder auseinanderdriften. Sobald die Synchronisation der Oszillatoren stabil ist, können zwischen den Bursts auch höhere Datenraten mit mehrwertig moduliertem Träger übermittelt werden.

In dem in den FIG 2 und 3 beschriebenen Beispiel wird eine Burstkomprimierung mit digitaler Signalfolge im Barkercode der Länge 11 beschrieben. Sobald die Bitfolge mit der Korrelationsfolge +1,+1,+1,-1,-1,-1,+1,-1,-1,+1,-1 übereinstimmt, erzeugt der Autokorrelator K einen scharfen Impuls der Signalhöhe 11. Hierzu erfolgt eine Übertragung mit mehreren aufeinanderfolgenden digitalen Burstfolgen B. Nach der Demodulation im Empfänger E wird das demodulierte Signal im Korrelator K autokorreliert. Zum Zeitpunkt des Empfangs einer Burstfolge steigt das Korrelatorsignal sehr stark an, wie dies FIG 3 zu entnehmen ist. Mit diesem Signal lässt sich dann der oben genannte Zähler starten, so dass sich bis zur nächsten Burstfolge eine bestimmte Zahl ergibt, mit der aus der Look-up-Tabelle ein Ansteuersignal für die zuzuschaltenden oder wegzuschaltenden Kapazitäten gewonnen werden kann. Damit lässt sich der Oszillator anhand des zeitlichen Abstands zwischen zwei Burstfolgen nachstimmen.

In vorteilhafter Weise kann somit die notwendige, hohe Datenrate für eine drahtlose Audiodatenübertragung ohne Quarz oder vergleichbare Bauelemente realisiert werden. Da gegenüber Hörgeräten mit geringerer Datenübertragungsrate keine neuen Bauteile hinzukommen, ist die Realisierung einer zukünftigen, schnellen und drahtlosen Audiodatenübertragung selbst in CIC-Hörgeräten möglich. Dadurch werden beispielsweise folgende Möglichkeiten eröffnet: Störarmes Telefonieren, bequemes Fitting, störarme Übertragung des Tons von einem Fernseher oder einer Musikanlage etc.

## Patentansprüche

1. Hörgerät mit
- einer Datenübertragungseinrichtung (E) zum Empfangen eines Synchronisationssignals (S) und einer Oszillatoreinrichtung (O) zum Takten der Datenübertragungseinrichtung (E),
**dadurch gekennzeichnet, dass**
- die Oszillatoreinrichtung (O) einen freilaufenden Oszillator ohne frequenzstabiles Bauteil umfasst und
- eine Korrelationseinrichtung (K) an die Datenübertragungseinrichtung (E) angeschlossen ist, so dass mit der Korrelationseinrichtung (K) ein vorgebbares Referenzsignal mit dem Synchronisationssignal (S) korrelierbar und anhand des Korrelationsergebnisses der freilaufende Oszillator hinsichtlich seiner Frequenz nachstimmbar ist.

2. **Hörgerät** nach Anspruch 1, wobei an dem freilaufenden Oszillator schaltbare Kapazitäten zum Nachstimmen des Oszillators angeschlossen sind.

3. **Hörgerät** nach Anspruch 1 oder 2, **das** digital ausgestaltet ist, wobei das Synchronisationssignal (S) aus einem zyklisch wiederkehrenden Burst besteht.

4. **Hörgerät** nach Anspruch 3, wobei der freilaufende Oszillator mit jedem Burst nachstimmbar ist.

5. **Hörgerät** nach Anspruch 3 oder 4, wobei ein Burst nach dem Barkercode codiert ist.

6. Hörgerät nach einem der vorhergehenden Ansprüche, wobei das Synchronisationssignal aus einem zyklisch wiederkehrenden Chirp besteht.

7. **Hörgerät** nach einem der vorhergehenden Ansprüche, wobei die Oszillatoreinrichtung eine Zähleinheit zum Erzeugen eines Zählsignals zwischen zwei Synchronisationssignalen (S) und eine Speichereinheit zum Speichern einer Frequenzcharakteristik aufweist, so dass aus dem Zählsignal eine direkte oder indirekte Frequenz bestimmbar ist, in die der freilaufende Oszillator zu stimmen ist.

8. **Hörgerät** nach Anspruch 7, wobei in der Speichereinheit eine Look-up-Tabelle gespeichert ist, aus der über das Zählsignal ein Zu- und Wegschalten von Kapazitäten als indirektes Frequenzmaß bestimmbar ist.

## Claims

1. Hearing device, with
- a data transmission unit (E) to receive a synchronisation signal (S) and an oscillator unit (O) to clock the data transmission unit (E),
**characterised in that**
- the oscillator unit (O) comprises a free-running oscillator without a frequency-stable component and
- a correlation unit (K) is connected to the data transmission unit (E), such that a predefinable reference signal can be correlated to the synchronisation signal (S) using the correlation unit (K) and the free-running oscillator can be retuned in respect of its frequency based on the correlation result.

2. Hearing device according to claim 1, with switchable capacitors being connected to the free-running oscillator to retune the oscillator.

3. Hearing device according to claim 1 or 2, which is configured in a digital manner, with the synchronisation signal (S) comprising a cyclically recurring burst.

4. Hearing device according to claim 3, with it being possible to retune the free-running oscillator with every burst.

5. Hearing device according to claim 3 or 4, with a burst being coded according to the Barker code.

6. Hearing device according to one of the preceding claims, with the synchronisation signal comprising a cyclically recurring chirp.

7. Hearing device according to one of the preceding claims, with the oscillator unit having a counting unit to generate a counting signal between two synchronisation signals (S) and a storage unit to store a frequency characteristic, such that a direct or indirect frequency can be defined from the counting signal, to which the free-running oscillator is to be tuned.

8. Hearing device according to claim 7, with a look-up table being stored in the storage unit, from which the connection and disconnection of capacitors can be defined as an indirect measure of frequency via the counting signal.

## Revendications

1. Appareil auditif comprenant
- un dispositif de transmission de données (E) destiné à recevoir un signal de synchronisation (S) et un dispositif oscillateur (O) destiné à synchroniser le dispositif de transmission de données (E),
**caractérisé en ce que**
- le dispositif oscillateur (O) comprend un oscillateur libre sans composant stable en fréquence et
- **en ce qu'**un dispositif de corrélation (K) est connecté au dispositif de transmission de données (E) de manière à ce qu'un signal de référence prédéfinissable puisse être corrélé au signal de synchronisation (S) à l'aide du dispositif de corrélation (K) et qu'à l'aide du résultat de corrélation, l'oscillateur libre puisse être corrigé au regard de sa fréquence.

2. Appareil auditif selon la revendication 1, des capacités commutables destinées à la correction de l'oscillateur étant connectées à l'oscillateur libre.

3. Appareil auditif selon la revendication 1 ou 2, qui est réalisé de manière numérique, le signal de synchronisation (S) étant constitué d'une salve se répétant de manière cyclique.

4. Appareil auditif selon la revendication 3, l'oscillateur libre pouvant être corrigé avec chaque salve.

5. Appareil auditif selon la revendication 3 ou 4, une salve étant codée selon le code de Barker.

6. Appareil auditif selon l'une quelconque des revendications précédentes, le signal de synchronisation étant constitué d'un chirp se répétant de manière cyclique.

7. Appareil auditif selon l'une quelconque des revendications précédentes, le dispositif oscillateur présentant une unité de comptage destinée à générer un signal de comptage entre deux signaux de synchronisation (S) et une unité de mémorisation destinée à mémoriser une caractéristique de fréquence, de manière à ce qu'une fréquence directe ou indirecte soit déterminable à partir du signal de comptage, dans laquelle l'oscillateur libre est à accorder.

8. Appareil auditif selon la revendication 7, une table look-up étant mémorisée dans l'unité de mémorisation, à partir de laquelle une connexion et une déconnexion de capacités sont déterminables en tant que mesure de fréquence indirecte par l'intermédiaire du signal de comptage.
